# EUROPEAN PATENT APPLICATION

(11) **EP 1 431 803 A2**
(43) Date of publication of application: **23.06.2004**
(21) Application number: 03029092.8
(22) Date of filing: 17.12.2003
(51) Int. Cl.: G03B 7/00, G01B 11/25, G03B 17/54

(54) **Image pickup apparatus for performing three-dimensional shape measurement and corresponding method**

(30) Priority: 19.12.2002 JP 2002368384; 05.11.2003 JP 2003375770
(71) Applicant: Olympus Corporation, Shibuya-ku, Tokyo (JP)
(72) Inventor: Miyoshi, Takashi, Intell. Prop. Dept, Hachioji-shi Tokyo (JP); Kosaka, Akio, Intell. Prop. Dept, Hachioji-shi Tokyo (JP)
(74) Representative: von Hellfeld, Axel, Dr. Dipl.-Phys.

(57) **Abstract**

An image pickup apparatus is capable of performing an image pickup with pattern projection on an object to obtain three-dimensional information on the object, and an image pickup without pattern projection. The image pickup apparatus comprises an exposure level determination section (78) configured to determine a predetermined exposure level needed by an image pickup device (44) of the image pickup apparatus, and a shutter speed determination section (78) configured to determine a first shutter speed to achieve the predetermined exposure level determined by the exposure level determination section in the image pickup without pattern projection, and a second shutter speed not slower than the first shutter speed. The image pickup with pattern projection is conducted by use of the second shutter speed.

## Description

The present invention relates to an image pickup apparatus which performs a three-dimensional shape measurement and an image pickup of an object by picking up an image of the object, and an image pickup method and control method of such an image pickup apparatus.

Jpn. Pat. Appln. KOKAI No. 2002-286415 discloses a three-dimensional shape measurement apparatus by pattern projection which projects a predetermined pattern such as a coded pattern on a target for image pickup (object), and measures accurate three-dimensional information (distance information) by analysis of a picked-up image thereof.

Furthermore, Jpn. Pat. Appln. KOKAI Publication No. 2002-170100 proposes a technique to project a pattern such as a lattice, striped, random dot or color code pattern by a pattern projection section so that, when information is insufficient to obtain correspondence, exact corresponding points can be obtained in a corresponding points search that searches for correspondence among a plurality of images from different views.

However, it has been difficult in the prior art to pick up an image of a pattern with good contrast for easy recognition thereof in an image pickup under ambient light.

The present invention has been attained in view of the foregoing points, and its object is to provide an image pickup apparatus capable of picking up an image of a pattern with contrast that does not cause troubles to the three-dimensional shape measurement even under the ambient light, and an image pickup method and control method of the image pickup apparatus.

According to an aspect of the present invention, there is provided an image pickup apparatus capable of performing an image pickup with pattern projection on an object to obtain three-dimensional information on the object, and an image pickup without pattern projection. The image pickup apparatus comprises: an exposure level determination section configured to determine a predetermined exposure level needed by an image pickup device of the image pickup apparatus; and a shutter speed determination section configured to determine a first shutter speed to achieve the predetermined exposure level determined by the exposure level determination section in the image pickup without pattern projection, and a second shutter speed not slower than the first shutter speed. The image pickup with pattern projection is conducted by use of the second shutter speed.

According to another aspect of the present invention, there is provided an image pickup apparatus comprising: an image pickup section, including an image pickup device, configured to pick up an image of an object; a photometric section configured to measure luminance information on the object; and a projection section configured to project a pattern on the object during the image pickup, the image pickup apparatus being capable of performing an image pickup by the image pickup section with pattern projection by the projection section on the object to obtain three-dimensional information on the object, and an image pickup by the image pickup section without pattern projection. The image pickup apparatus further comprises: an exposure level determination section configured to determine a predetermined exposure level needed by the image pickup device; and a shutter speed determination section configured to determine a first shutter speed to achieve the predetermined exposure level determined by the exposure level determination section in the image pickup without pattern projection, and a second shutter speed not slower than the first shutter speed, on the basis of luminance information on the object measured by the photometric section.
The image pickup section conducts the image pickup with pattern projection by the projection section by use of the second shutter speed.

According to an aspect of the present invention, there is provided a method of an image pickup for an image pickup apparatus capable of performing an image pickup with pattern projection on an object to obtain three-dimensional information on the object, and an image pickup without pattern projection. The method comprises: determining a predetermined exposure level; determining a first shutter speed to achieve the predetermined exposure level in the image pickup without pattern projection, and a second shutter speed not slower than the first shutter speed; and conducting the image pickup with pattern projection by use of the second shutter speed.

According to another aspect of the present invention, there is provided a method of controlling an image pickup apparatus capable of performing an image pickup with pattern projection on an object to obtain three-dimensional information on the object, and an image pickup without pattern projection. The method comprises: determining a predetermined exposure level; and determining a first shutter speed to achieve the predetermined exposure level in the image pickup without pattern projection, and a second shutter speed not slower than the first shutter speed. The second shutter speed is used when the image pickup with pattern projection is conducted.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram showing how a three-dimensional image pickup apparatus as a first embodiment of an image pickup apparatus of the present invention is used;
FIG. 2 is a diagram showing a configuration of the three-dimensional image pickup apparatus in the first embodiment;
FIG. 3 is a diagram showing in detail the configuration of essential parts of the three-dimensional image pickup apparatus in the first embodiment;
FIG. 4 is a view showing a banded color code pattern;
FIG. 5A is a diagram to explain a photometric proper stationary light (ambient light) component exposure;
FIG. 5B is a diagram to explain an ambient light component exposure after shutter speed adjustment;
FIG. 5C is a diagram to explain an ambient light component exposure after aperture/shutter speed adjustment;
FIG. 6 is a diagram showing a relationship among an EV (exposure value), a TV (time value, shutter speed) and an AV (aperture value, F No.) to explain effects particular to the first embodiment;
FIG. 7A is a diagram showing a luminance profile in a certain section of an image when the shutter speed is slow;
FIG. 7B is a diagram showing a luminance profile when an aperture value is changed;
FIG. 7C is a diagram showing a luminance profile when the shutter speed is fast;
FIG. 8 is a graph to explain tone curve correction;
FIG. 9 is a graph showing a relationship between an image pickup aperture and a projection aperture for adjusting a light amount of flash emission;
FIG. 10 is a graph to explain an operation for determining the photometric proper ambient light component exposure after setting and adjusting to a minimum image pickup aperture;
FIG. 11 is a graph to explain selection of the aperture value for field depth priority;
FIG. 12 is a graph showing a relationship between field depths when selecting an open aperture and when a projection light emission amount is the maximum;
FIG. 13 is a diagram showing a configuration of the three-dimensional image pickup apparatus as a second embodiment of the three-dimensional image pickup apparatus of the present invention;
FIG. 14 is a diagram showing in greater detail the configuration of essential parts of the three-dimensional image pickup apparatus in the second embodiment;
FIG. 15 is a diagram showing an example of a light path dividing device constituted of mirrors;
FIG. 16 is a diagram showing a random dot pattern;
FIG. 17 is a diagram showing a stereographic image of a pattern-projected object to be stored as stereographic pattern projected image data;
FIG. 18 is a diagram showing a stereographic image of a texture-illuminated object to be stored as stereographic texture-illuminated image data;
FIG. 19 is a diagram to explain arrangement of second and third photometric devices when external automatic light control is implemented; and
FIG. 20 is a diagram to explain photometric field angles of the second and third photometric devices.

Embodiments of the present invention will hereinafter be described in reference to the drawings.

It should be noted that "stationary light" as "ambient light" in the present specification means almost constant light originally present in an environment where an image pickup takes place, such as illumination in a room or outside sunlight, unlike light intentionally cast by a photographer for the image pickup.

In addition, such terms as "low" or "dark" mean states of data on an object image picked up mainly at exposure values causing underexposure due to a difference in an exposure level that can be relatively recognized, as compared with the exposure values when an pattern portion illuminated by an illumination section or projected by a projection section is properly exposed. This indicates that when illumination or projection is set to have an exposure value lower than that of the ambient light and then performed by the illumination section or the projection section, the ambient light accounts for a small portion of a total exposure, and a proportion of illumination light or projection light by the illumination section or the projection section is relatively larger.

Furthermore, a "proper" exposure level includes at least a state of the exposure level in which a pattern on an object in an image picked up with pattern projection has a luminance difference that can be recognized within a dynamic range.

Still further, an image pickup section as image pickup means, which will be described taking a digital still camera as an example, includes a video camera or a still camera using a film.

### [First embodiment]

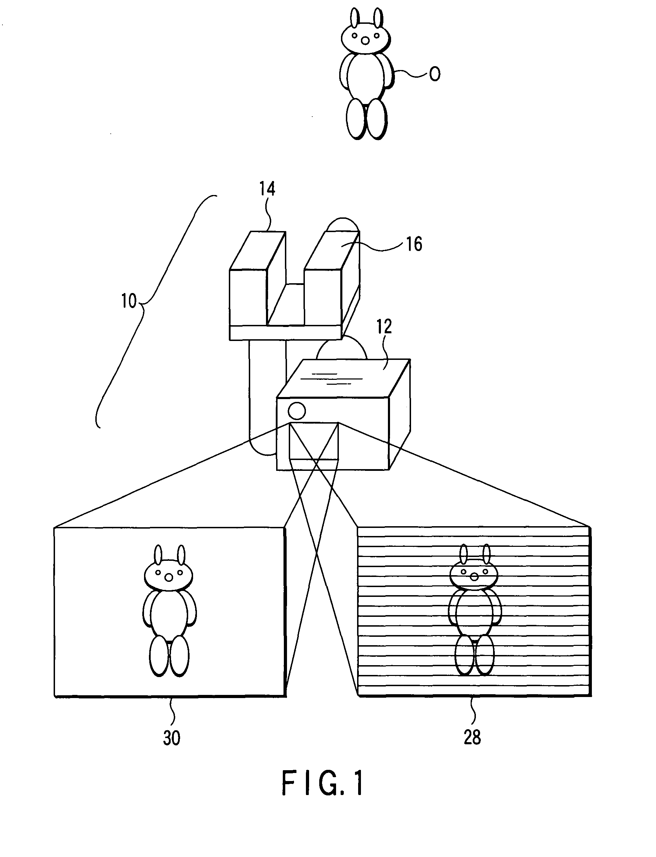

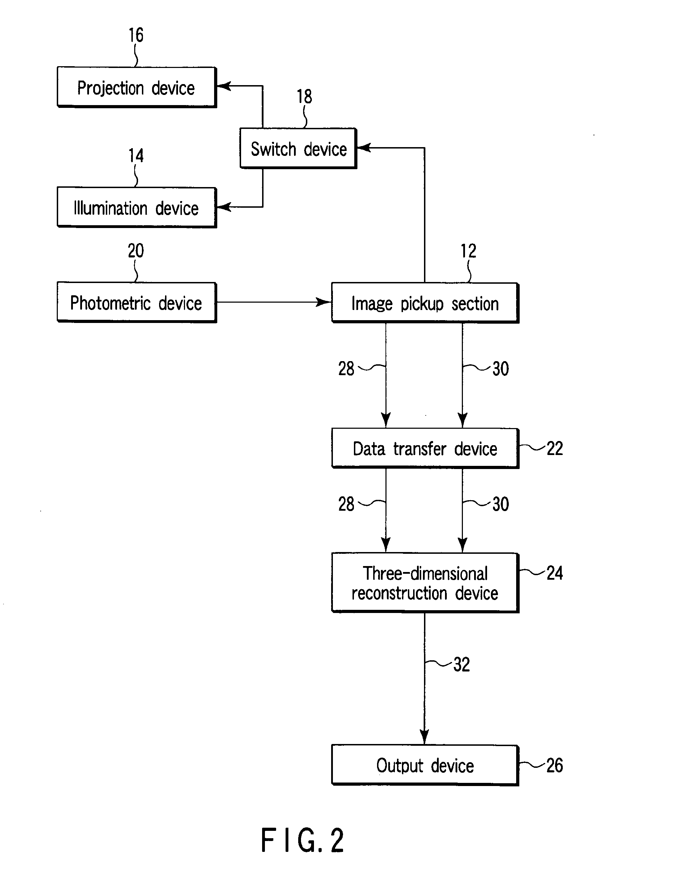

As shown in FIG. 1 and FIG. 2, a three-dimensional image pickup apparatus 10 as a first embodiment of an image pickup apparatus has an image pickup section 12, an illumination device 14, a projection device 16, a switch device 18, a photometric device 20, a data transfer device 22, a three-dimensional reconstruction device 24 and an output device 26. Here, the image pickup section 12 picks up an image of an object O. The illumination device 14 functions as an illumination section and illumination means for illuminating the object O when picking up its image. The projection device 16 functions as a projection section and projection means for irradiating the object O with a pattern when picking up its image. The switch device 18 switches the illumination device 14 and the projection device 16. The photometric device 20 functions as a photometric section and photometric means for measuring brightness of the object O. Details of the image pickup section 12, the illumination device 14, the projection device 16, the switch device 18 and the photometric device 20 will be described later. Contrarily, the data transfer device 22, the three-dimensional reconstruction device 24 and the output device 26 are the same as conventional ones. Therefore, they will be simply described here. In short, the data transfer device 22 transfers pattern-projected image data 28 and texture-illuminated image data 30 obtained by the image pickup section 12 to the three-dimensional reconstruction device 24. The three-dimensional reconstruction device 24 obtains three-dimensional data 32 including at least one of a depth image, a polygon image and voxel data, on the basis of the pattern-projected image data 28 and the texture-illuminated image data 30. The output device 26 outputs this three-dimensional data 32.
In addition, the "depth image" means an image in which each pixel contains information on a distance from the image pick up apparatus to the object, in contrast to general luminance image in which each pixel contains luminance information as a texture.

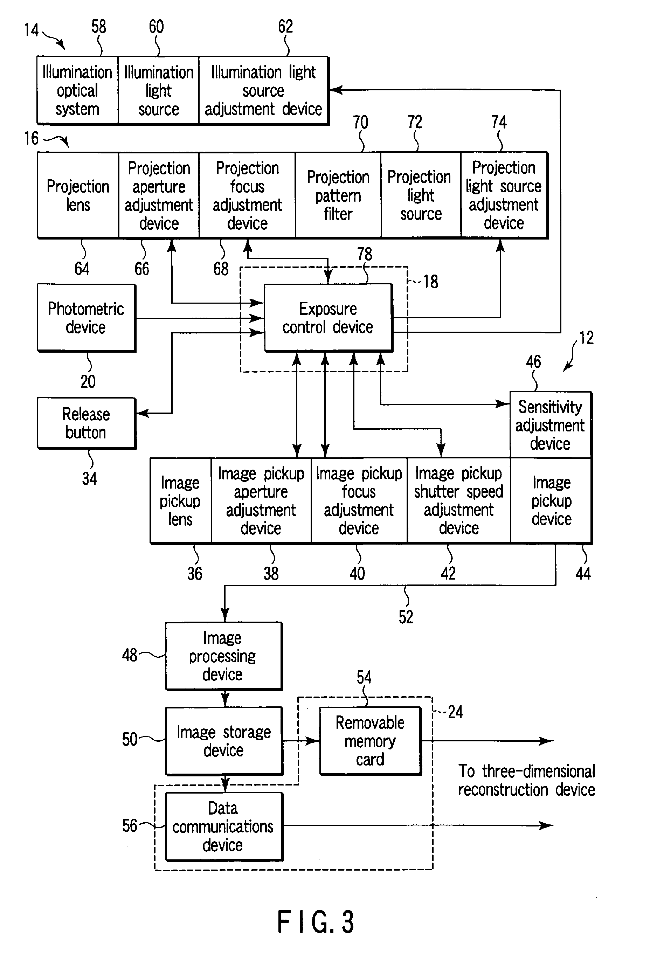

As shown in FIG. 3, the image pickup section 12 has a release button 34, an image pickup lens 36, an image pickup aperture adjustment device 38, an image pickup focus adjustment device 40, an image pickup shutter speed adjustment device 42, an image pickup device 44 and a sensitivity adjustment device 46. Their configurations are the same as those of common image pickup apparatus and will not be described. Further, the image pickup section 12 comprises an image processing device 48 and an image storage device 50. Here, image data 52 picked up by the image pickup device 44 is processed by the image processing device 48 and stored by the image storage device 50. This image data 52 is sent to the three-dimensional reconstruction device 24 by the data transfer device 22 including a removable memory card 54, data communications device 56 and the like.

On the other hand, the illumination device 14 has an illumination optical system 58, an illumination light source 60 and an illumination light source adjustment device 62. Here, an electronic flash, which is a so-called strobe, as a flash emission source is used for the illumination light source 60 in the present embodiment. This illumination light source 60 can be adjusted to an optional exposure time by the illumination light source adjustment device 62. In accordance with this exposure time adjustment, a light amount of the illumination light source 60 is adjusted. In addition, the flash emission source may be a light source having a light emission time short enough for a shutter speed of the image pickup apparatus. In other words, it is not limited to the electronic flash or an illumination device using a xenon light emission tube called the strobe, but an LED for pulsed emission of infrared light or visible light may be used.

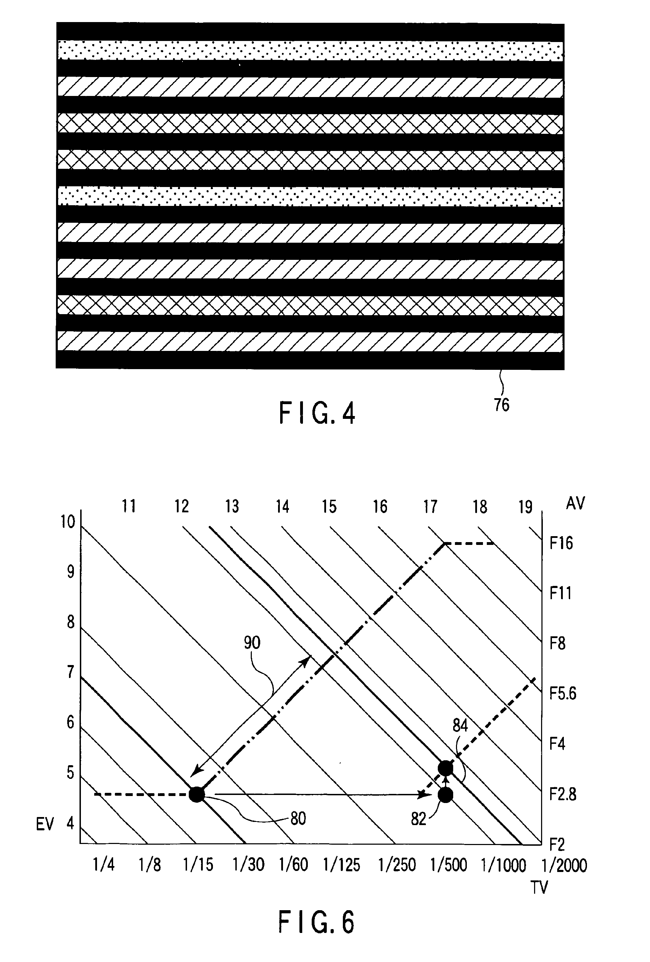

Furthermore, the projection device 16 has a projection lens 64, a projection aperture adjustment device 66, a projection focus adjustment device 68, a projection pattern filter 70, a projection light source 72 and a projection light source adjustment device 74. Here, one that can project a banded color code pattern 76 as shown in FIG. 4 is used for the projection pattern filter 70 in the present embodiment. The electronic flash as the flash emission source, which is a so-called strobe, is used for the projection light source 72 similarly to the illumination light source 60 of the illumination device 14, which can be adjusted to an optional light emission time by the projection light source adjustment device 74. In accordance with this exposure time adjustment, a light amount of the projection light source 72 is adjusted.

Here, the image pickup section 12 can perform an image pickup with or without the pattern projection by the projection device 16. Then, the image pickup device 44 of the image pickup section 12 is set to an image pickup shutter speed that enables a necessary predetermined exposure level, thereby enabling the image pickup. Further, the image pickup without the pattern projection includes at least an image pickup carried out in a state in which light is not intentionally cast by a photographer.

Furthermore, an exposure control device 78 as the switch device 18 is connected to the photometric device 20, the release button 34, the image pickup aperture adjustment device 38, the image pickup focus adjustment device 40, the image pickup shutter speed adjustment device 42, the sensitivity adjustment device 46, the projection aperture adjustment device 66, the projection focus adjustment device 68, the projection light source adjustment device 74 and the illumination light source adjustment device 62. The exposure control device 78 functions as an exposure level determination section, a shutter speed determination section, an image pickup aperture adjustment section, an exposure level determination means and a shutter speed determination means, as will be described later.

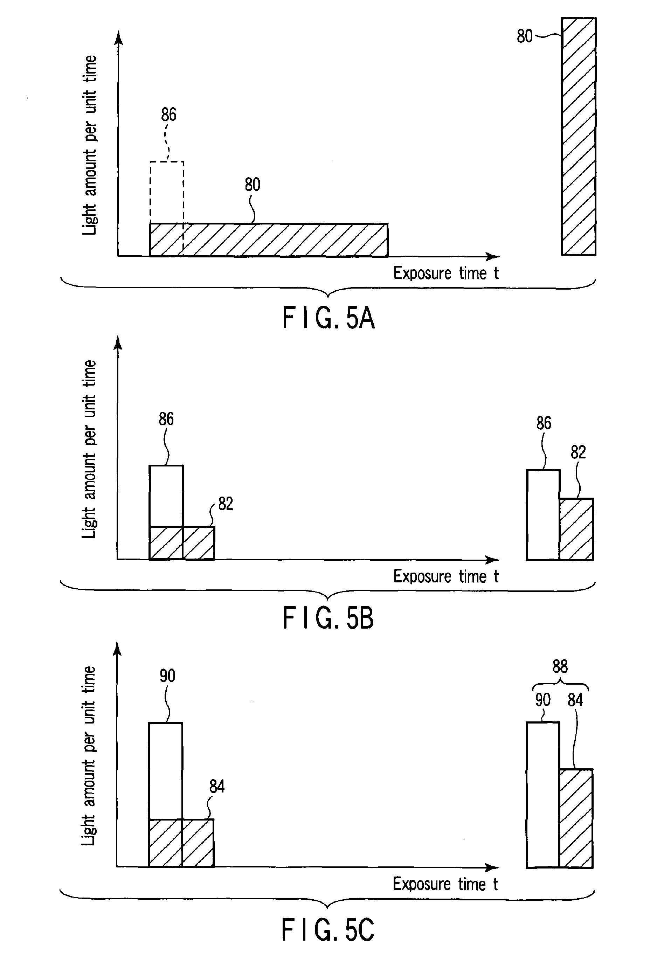

Next, an operation of the three-dimensional image pickup apparatus 10 in such a configuration will be described. More specifically, when the photographer presses the release button 34 of the image pickup section 12, the exposure control device 78 reads luminance information from the photometric device 20. On the basis of this luminance information, the image pickup shutter speed adjustment device 42 is first set to a shutter speed at which the object O appears dark without the illumination of the illumination device 14 or the projection of the projection device 16.
If photometric proper ambient light component exposure 80 shown in FIG. 5A is exposure by proper ambient light, exposure after such a shutter speed adjustment will be ambient light component exposure after shutter speed adjustment 82 shown in FIG. 5B. As apparent from FIG. 5A and FIG. 5B, light exposure of the object is insufficient only with the exposure by the ambient light in this operation.

Next, the exposure control device 78 causes the projection device 16 to perform pre-emission, and reads the luminance information at the same time from the photometric device 20. On the bases of this luminance information, an aperture value of the image pickup section 12 is fixed at a value to stop down the aperture as much as possible so that the object O has a correct exposure with the emission amount of the projection light source adjustment device 74.
The aperture value is transmitted to the image pickup aperture adjustment device 38. In this way, an ambient light component exposure after aperture/shutter speed adjustment 84 shown in FIG. 5C is accomplished, so that the image pickup with less exposure by the ambient light than the exposure by flash emission can be achieved.

Furthermore, in the projection device 16, the projection light source 72 emits light synchronously with a first image pickup by the image pickup section 12, and illuminates the projection pattern filter 70. An image of the projection pattern filter 70 is formed on the object O via the projection lens 64. The image pickup section 12 picks up an image of the pattern-projected object O as shown in FIG. 1. This picked-up image data 52 is stored in the image storage device 50 as the pattern-projected image data 28 by the image processing device 48.

Next, the exposure control device 78 sets a proper emission amount of the illumination device 14 in accordance with the luminance information obtained by the pre-emission of the illumination device 14, and indicates the emission amount to the illumination light source adjustment device 62. This enables the image pickup with the proper light amount of the illumination as shown in FIG. 5C.

When an optical transmittance of the pattern is sufficiently high and the illumination light source is identical with the projection light source or the light emission amounts almost correspond, luminance information obtained by pre-emission of the projection light source may be used. In this case, an almost proper light emission amount can be achieved, and illumination can be implemented with an intended arrangement and color temperature of the illumination light. Moreover, intervals of image pickups become short and trackability of a moving body is improved by omitting the pre-emission of the illumination device 14. Naturally, even with the identical light sources, the light amount obtained by the illumination can be higher than the light amount obtained by the pattern projection due to the influence of the optical transmittance of the pattern. With this point in view, it is needles to say that an image of the illuminated object may be picked up at a shutter speed faster than the shutter speed at which an image of the pattern-projected object is picked up.

Here, the illumination device 14 emits light synchronously with a second image pickup by the image pickup section 12, and an image of the texture-illuminated object O shown in FIG. 1 is picked up.
This picked-up image data 52 is stored in the image storage device 50 as the texture-illuminated image data 30 by the image processing device 48.

To explain a relationship of exposures in greater detail, as shown in FIG. 5A to FIG. 5C, the image pickup shutter speed adjustment device 42 adjusts the shutter speed to a high speed so that the brightness of the object O without using the illumination device 14 or the projection device 16 will be less than the photometric proper ambient light component exposure 80 based on the luminance information from the photometric device 20. In this way, it is possible to obtain the ambient light component exposure after shutter speed adjustment 82 which is darker than when the projection device 16 or the illumination device 14 is used.
At this stage, the ambient light component exposure after shutter speed adjustment 82 is less than a flash emission component exposure 86 using the projection device 16 or the illumination device 14. At this point, the shutter speed adjusted to the high speed preferably takes time longer than an emission time of the projection light source 72. This prevents the light amount by the emission of the projection light source 72 or the illumination light source 60 from being wasted.

Next, an image pickup is implemented with the image pickup aperture adjusted by the image pickup aperture adjustment device 38 so that proper brightness is obtained in the illumination of the illumination device 14 and the projection of the projection device 16. In this case, an image of the pattern-projected image data 28 on which the color code pattern 76 is projected with clear contrast is picked up with an image pickup exposure 88 in which an ambient light component exposure after aperture/shutter speed adjustment 84 and a flash emission component exposure after aperture adjustment 90 are added.

The pattern-projected image data 28 and the texture-illuminated image data 30 thus obtained are recorded in the removable memory card 54 which is the data transfer device 22, and are handed over as the image data 52 to the three-dimensional reconstruction device 24. Alternatively, they are transmitted by, for example, the data communications device 56 which is the data transfer device 22 so as to be sent as the image data 52 to the three-dimensional reconstruction device 24.

Furthermore, the three-dimensional reconstruction device 24 uses the pattern-projected image data 28 and the texture-illuminated image data 30 to decode the color code pattern 76, and calculates a distance emerged as a deformation amount of the color code pattern 76 by a principle of triangular ranging, thereby producing a depth image of the object O. This produced depth image is output as three-dimensional data 32 from the output device 26 together with a texture image obtained from the texture-illuminated image data 30 corresponding to the depth image.

The above image pickup operation is implemented with each component controlled by the exposure control device 78.

In this way, a predetermined exposure level is set only with the ambient light, for example, a low exposure level is set by adjusting the shutter speed so that it becomes faster than the shutter speed at which the proper exposure is obtained (underexposure under the ambient light), and then the image pickup aperture is adjusted by the projection to have the proper exposure level, thus performing an image pickup with the projection. This enables the image pickup with less exposure by the ambient light as compared with the projection light amount, so that the image of the pattern can be picked up with good contrast.

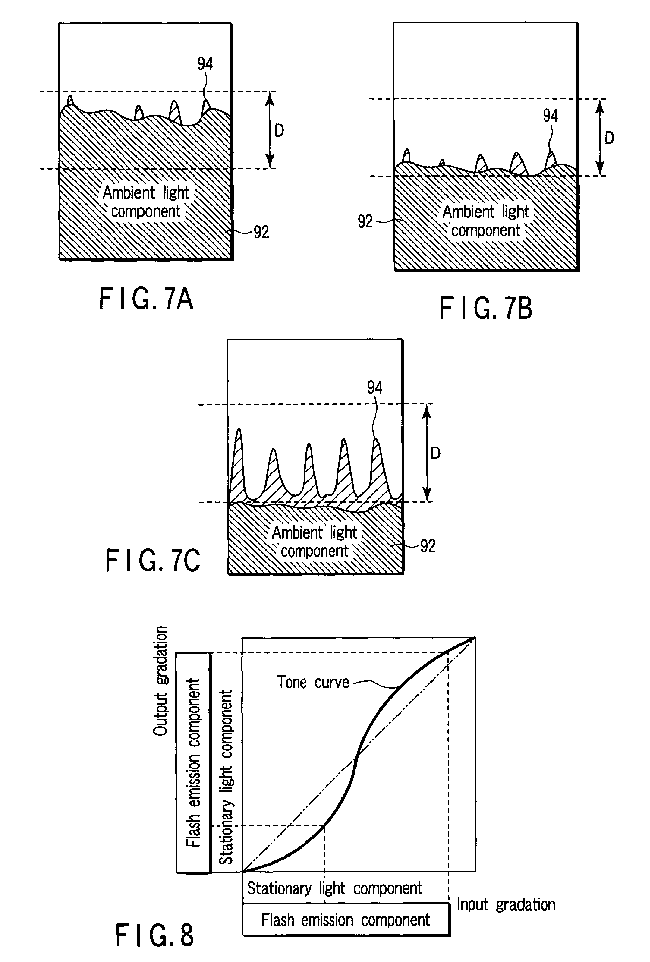

Furthermore, the present first embodiment has the following particular effects. If the ambient light component exposure after shutter speed adjustment 82 is achieved, for example, by setting a faster shutter speed than that under the photometric proper ambient light component exposure 80 in accordance with a relationship among an EV (exposure value), a TV (shutter speed) and an AV (FNo.) shown in FIG. 6, an image of ambient light components are picked up about 5 EV darker. To compensate for this, if the image pickup aperture is adjusted and light emission and projection are performed with the flash emission component exposure after aperture adjustment 90, color can be determined from a texture color of the object O and a component of a pattern color regardless of the color temperature and intensity of the ambient light because the flash emission component exposure after aperture adjustment 90 is sufficiently greater than the ambient light component exposure after aperture/shutter speed adjustment 84. Thus, a recognition rate of the color code pattern 76 is enhanced especially when a color pattern is used.

It should be noted that an exposure value which is about 5 EV darker than the photometric proper ambient light component exposure 80 by the photometric device 20 is set by shifting the shutter speed to a high-speed side. However, this value may be an exposure value at which dark portions of the pattern are not ruined by the ambient light when the pattern is projected. This will be explained in reference to FIG. 7A to FIG. 7C respectively showing luminance profiles in a certain section of an image. Height of the luminance profile changes with changes in exposure due to the aperture and shutter speed, and a proportion of an ambient light component 92 to the flash emission component changes in accordance with the shutter speed.

If the shutter speed is low, the proportion of the stationary light component 92 to a pattern component 94 by flash emission becomes greater as shown in FIG. 7A, and the contrast of a picked-up image lowers. The flash emission component is buried in some cases. In FIG. 7B, exposure is changed by changing the aperture value to decrease the ambient light component 92. However, this also decreases the flash emission component and makes it impossible to recognize the flash emission component buried in the ambient light component 92. In FIG. 7C, the ambient light component 92 becomes smaller than the flash emission component by increasing the shutter speed. The aperture of the image pickup apparatus is set and adjusted so that a proportion of the pattern component 94 by the flash emission at the above point falls within a dynamic range D, and the shutter speed is set and adjusted to a high speed, and thus the ambient light component 92 may be decreased.

In this way, the darkest portion of the pattern is close to the darkest portion in an image gradation and the brightest portion is close to the brightest portion in the image gradation, so that a pattern image with good contrast can be obtained. In other words, as shown in FIG. 7C, it is convenient if at least the ambient light component 92 contributes only in the vicinity of a lowest position to the dynamic range D which is a exposure permitted width of the image pickup device 44 such as a CCD, and the exposure of the pattern properly falls in the exposure permitting width. A shift amount of the shutter speed is thus decided. If the photometric proper ambient light component exposure 80 is a state in which the ambient light component 92 is in the dynamic range D, the shutter speed may be shifted in such a manner that the exposure decreases for an amount of the dynamic range at the maximum. In addition, even if a slight amount of the ambient light component 92 is left, making an adjustment so that a significant luminance difference that can be recognized exists in the pattern component 94 by the flash emission within the dynamic range does not depart from the essence of the present invention.

Furthermore, as shown in FIG. 8, usually in an image picked up by the digital still camera, brightness is not distributed, for example, at 8 bit linear, and it is subjected to a tone curve correction so that dark noises do not outstand by causing the tone of the dark portions to be darker. The shift amount of the shutter speed is set and adjusted in consideration for the correction by the tone curve, whereby the same effects as the above effects may be obtained.

In addition, each configuration in this first embodiment can naturally be changed and modified in various manners. For example, the aperture and emission amount of the projection device 16 by pre-emission and the emission amount of the illumination device 14 may be decided by use of the emission amount decided from the distance information from the image pickup focus adjustment device 40 of the image pickup section 12 and the emission amounts of the light sources 72 and 60, and the emission amount may be indicated to the projection light source adjustment device 74 and the illumination light source adjustment device 62 by so-called direct photometry for detection of brightness of an image to be picked up or by external automatic light control using an external sensor. Further, it is not always necessary to carry out both of the image pickups with projection and illumination.

Furthermore, the projection light source 72 of the projection device 16 and the illumination light source 60 of the illumination device 14 do not always need to be the flash emission sources. However, when the flash emission source is used, the emission time of the light source is significantly short, so that the shutter speed can be heightened to the maximum. Therefore, the use of the flash emission source is preferable in that it is possible to expect effects in which influences of the ambient light can be reduced, blurring of the object is prevented, and images of a shape and a pattern image can be vividly picked up.

Furthermore, in the above description, the image pickup aperture is decided after the shutter speed is first shifted to the high-speed side, as shown in FIG. 5A to FIG. 5C and FIG. 6. However, the shutter speed may be shifted to the high-speed side after the image pickup aperture value is stopped down as much as possible to set and adjust to the minimum image pickup aperture on the basis of the emission amount of the projection device 16 based on the adjustment of the projection light source adjustment device 74. This minimum image pickup aperture is an aperture (aperture at which the exposure level is equal or brighter) which is brighter than an aperture that can achieve a predetermined exposure level in the image pickup with the pattern on the assumption that the shutter speed of the image pickup section 12 takes the same time as the time in which the pattern is projected.

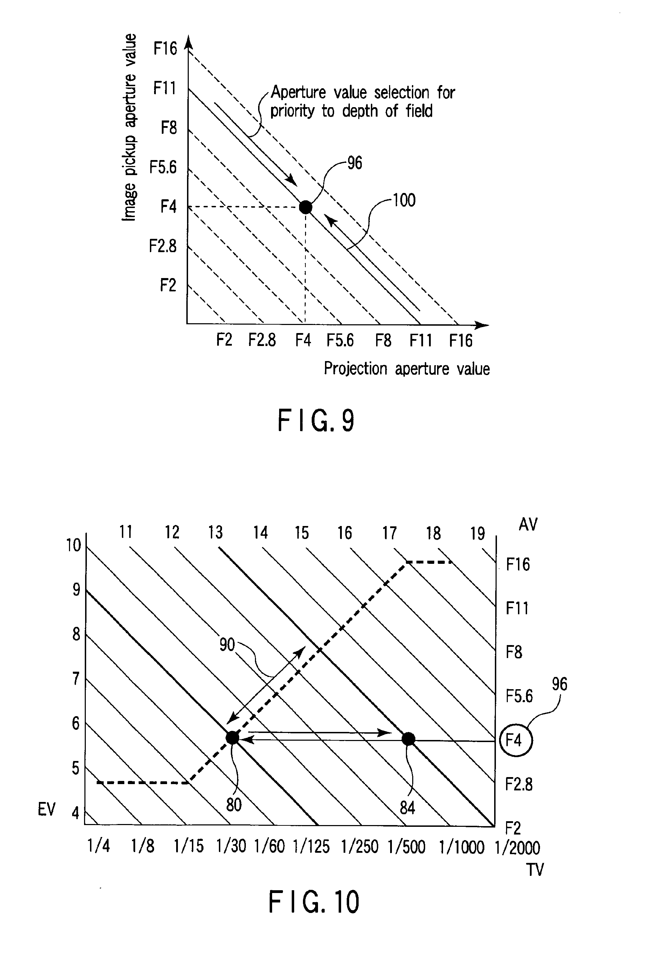

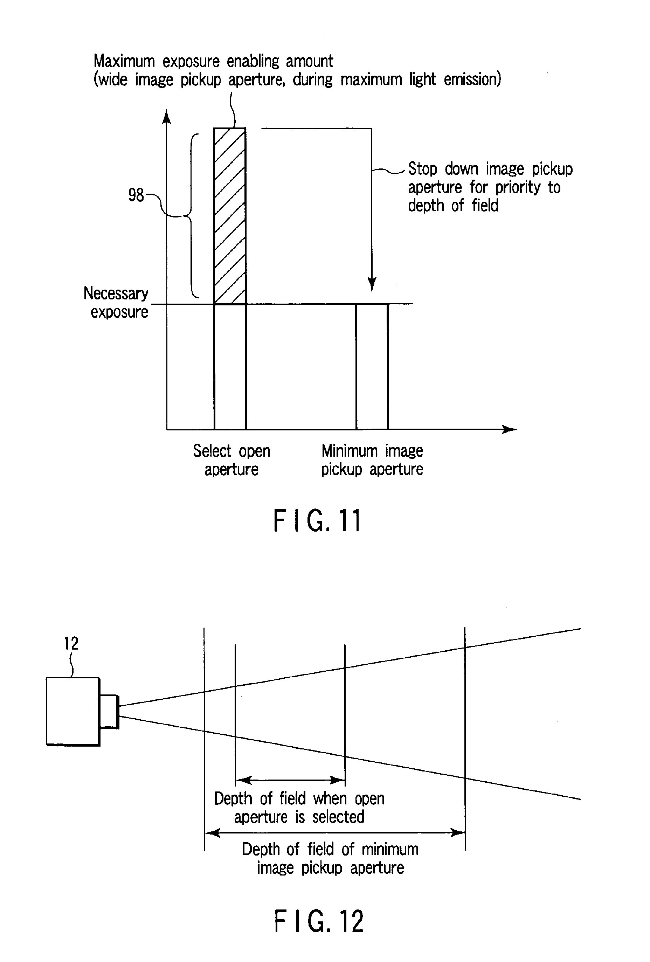

In other words, as shown in FIG. 9, a minimum image pickup aperture 96 that makes it possible to obtain a proper exposure is first decided on the basis of the emission amount of the projection device 16. Here, it is assumed that the minimum image pickup aperture 96 is F4. Thus, as shown in FIG. 10, after the minimum image pickup aperture 96 is set and adjusted to, the photometric proper ambient light component exposure 80, which is the proper exposure value by the ambient light component of the moment, is decided. In this case, an extra light amount 98 is used by the image pickup aperture adjustment device 38 to stop the aperture down as shown in FIG. 11, but the necessary exposure is secured. In addition, the shutter is set to the ambient light component exposure after aperture/shutter speed adjustment 84 by the image pickup shutter speed adjustment device 42 so that the image of the object is darker than the above brightness, and thus the image pickup exposure 88 may be obtained by the projection and illumination.
In this case, the predetermined emission amount from the projection light source 72 is fully utilized for the object O, thereby making it possible to achieve the image pickup with a great depth of field (FIG. 12), increase a focus range of the image pickup apparatus and extend a range in which projection is performed with good contrast.

Here, when the emission amount of the projection device 16 can be adjusted, the extra light amount 98 becomes the maximum if the emission amount is adjusted to a maximum emission amount, so that the field depth can be adjusted to the greatest depth. Here, the image pickup aperture is adjusted to have the greatest field depth, but the image pickup aperture of the image pickup apparatus may be decided to have a predetermined field depth set by an operator.

Furthermore, when a pattern field depth of the projection device 16 is insufficient, the shutter speed may be shifted to the high-speed side after the aperture value of the projection aperture, in addition to the image pickup aperture, is decided so as to stop it down as much as possible on the basis of the maximum emission amount in the case where the emission amount of the projection light source 72 can be adjusted.
In a relationship between the image pickup aperture and the projection aperture for adjusting the light amount of flash emission shown in FIG. 9, any point on an aperture selection line with a projection maximum light amount 100 can be selected as such an aperture value.
Here, if the image pickup aperture and the projection aperture have almost equivalent optical conditions, an adjustment may be made so that their aperture values will be equal. If necessary, an adjustment may be made to bring one of the field depth of the image pickup or that of the projection to a predetermined value.
In this case, the extra light amount 98 is used to stop the aperture down by the image pickup aperture adjustment device 38 and by the projection aperture adjustment device 66, but the necessary exposure is secured. This operation makes it possible to increase a projection focus range on the pattern similarly to an image pickup focus of the image pickup apparatus and extend the range in which projection is achieved with good contrast, in addition to the effects described above.

In this way, the image pickup aperture is selected so that the proper exposure can be obtained with a maximum projection emission amount, and then a predetermined exposure level is set only with the ambient light, for example, the shutter speed is adjusted so that it becomes higher than the shutter speed at which the proper exposure is obtained (underexposure only with the ambient light), and the image pickup is performed with the projection, whereby the image pickup can be performed with less exposure by the ambient light as compared with the projection light amount in addition to the satisfactory field depth of the image pickup apparatus, and thus the image of the pattern can be picked up with good contrast.

Furthermore, the image pickup is performed in the order of projection and illumination, but may also be performed in the order of illumination and projection. Further, the exposure control device 78 controls each component, but it is needless to mention that adjustment sections of the image pickup section 12 and the respective devices may be set by a manual operation, in which the same effects can also be obtained. Moreover, the shutter speed in the image pick up with the pattern projection, that is, a second shutter speed is preferably faster than a first shutter speed used for the image pickup without the pattern projection as in the present embodiment. However, if the second shutter speed is equal to or faster than the first shutter speed, a proportion of the exposure by the ambient light does not become larger than that in the image pickup without the pattern projection, and it is thereby possible to obtain the contrast of the image picked up with the pattern projection without unnecessarily deteriorating it. In other words, if the second shutter speed is set to be not slower than the first shutter speed, it is apparent that the image pickup can be achieved with contrast that does not cause troubles to a three-dimensional shape measurement.

### [Second embodiment]

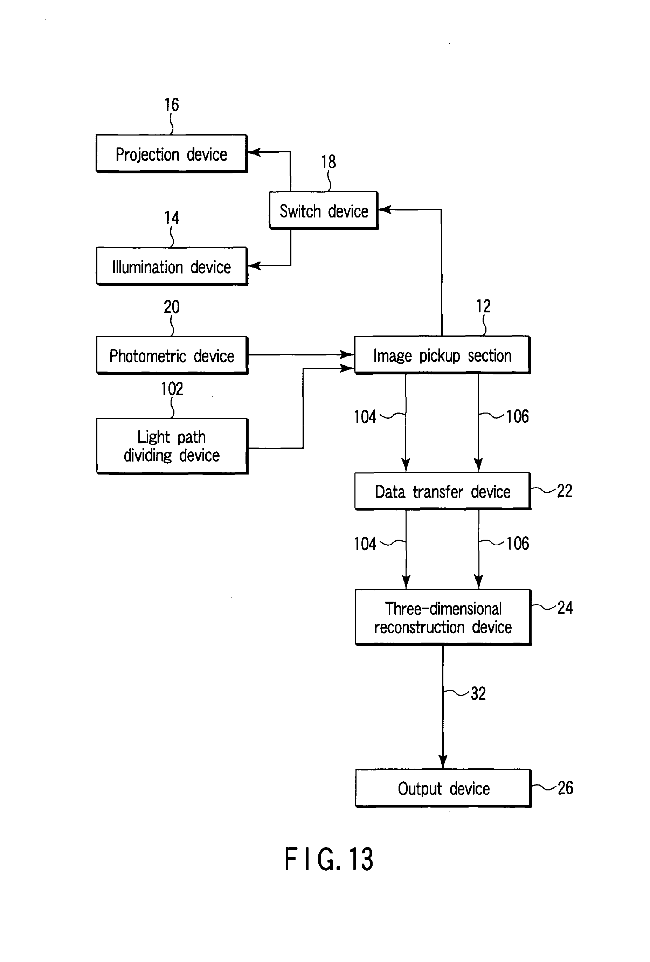

Next, a second embodiment of the present invention will be described. As shown in FIG. 13, the three-dimensional image pickup apparatus 10 as the second embodiment of the image pickup apparatus has the image pickup section 12, the illumination device 14, the projection device 16, the switch device 18, the photometric device 20, the data transfer device 22, the three-dimensional reconstruction device 24 and the output device 26, as in the first embodiment. It further has a light path dividing device 102 in the present embodiment. This light path dividing device 102 whose details will be described later inputs images of the object O from different view points to the image pickup section 12. Therefore, in the present second embodiment, stereographic pattern projected image data 104 and stereographic texture-illuminated image data 106 can be obtained by the image pickup section 12. The three-dimensional reconstruction device 24 obtains three-dimensional data 32 including at least one of a depth image, a polygon image or voxel data on the basis of the stereographic pattern projected image data 104 and the stereographic texture-illuminated image data 106 handed over via the data transfer device 22.

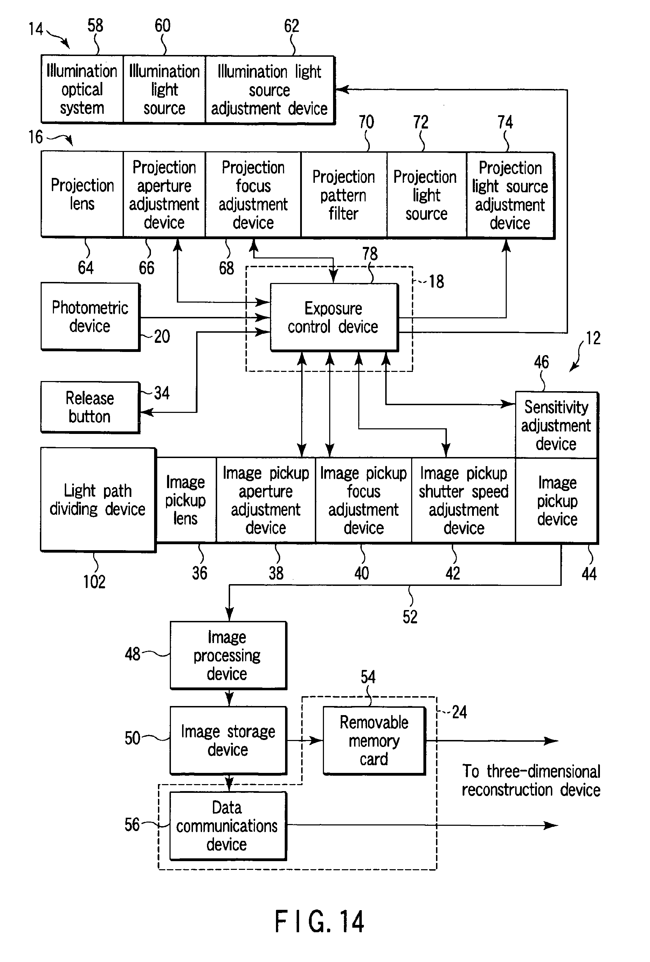

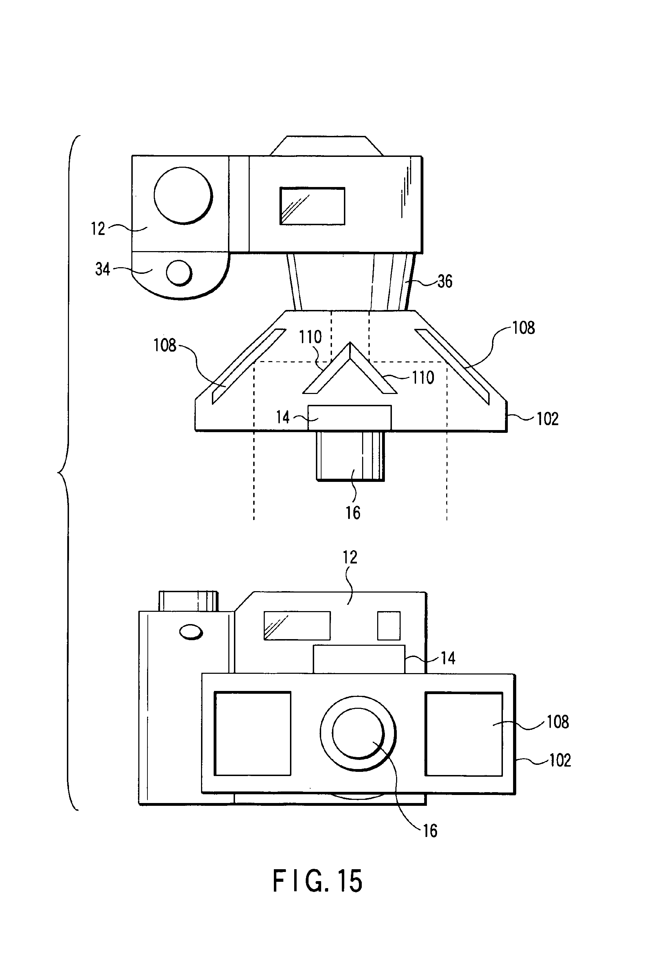

As shown in FIG. 14, the image pickup section 12, as in the first embodiment, has the release button 34, the image pickup lens 36, the image pickup aperture adjustment device 38, the image pickup focus adjustment device 40, the image pickup shutter speed adjustment device 42, the image pickup device 44 and the sensitivity adjustment device 46. The light path dividing device 102 is attached to the image pickup lens 36 of the image pickup section 12. In other words, this light path dividing device 102 is also referred to as a stereographic adaptor, and can form the images of the object O from the different view points on the image pickup device 44 of the image pickup section 12. This light path dividing device 102 comprises distantly disposed light receiving mirrors 108, and light refraction mirrors 110 disposed in front of the image pickup lens 36, for example, as shown in FIG. 15. More specifically, an image of the object reflected by these light receiving mirrors 108 is incident on the image pickup lens 36 by the light refraction mirrors 110, and thus the images from two different view points, that is, stereographic images can be formed on the image pickup device 44.

Here, the image data 52 picked up by the image pickup device 44 is processed by the image processing device 48 and stored by the image storage device 50. This image data 52 is sent to the three-dimensional reconstruction device 24 by the data transfer device 22 including the removable memory card 54, the data communications device 56 and the like.

On the other hand, the illumination device 14, as in the first embodiment, has the illumination optical system 58, the illumination light source 60 and the illumination light source adjustment device 62. Here, the electronic flash, which is a so-called strobe, as the flash emission source is used for the illumination light source 60 in the present embodiment, and this illumination light source 60 can be adjusted to an optional exposure time by the illumination light source adjustment device 62. In this way, the light amount of the illumination light source 60 is adjusted.

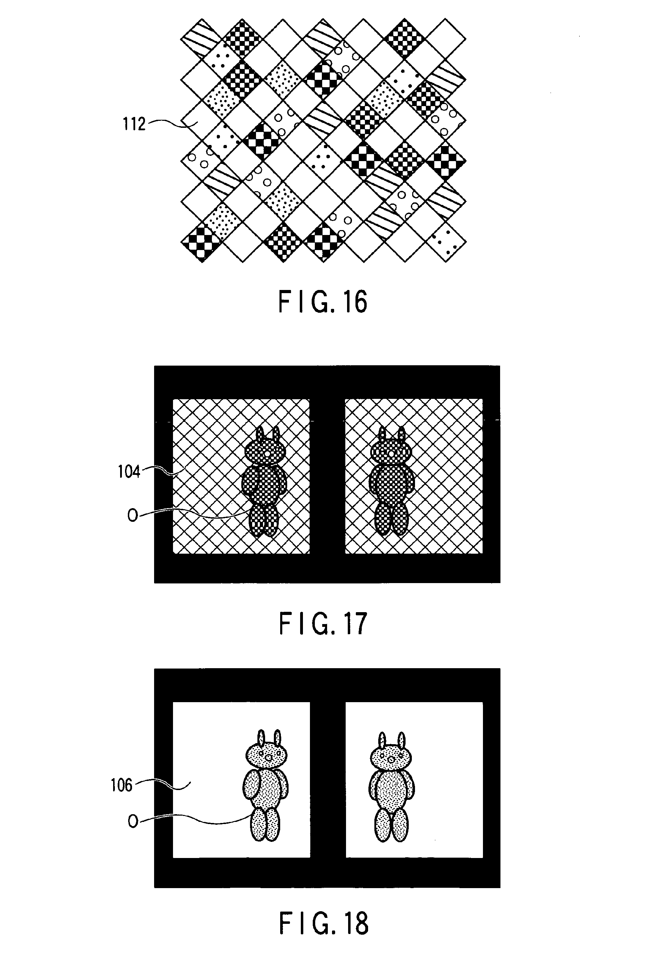

Furthermore, the projection device 16, as in the first embodiment, has the projection lens 64, the projection aperture adjustment device 66, the projection focus adjustment device 68, the projection pattern filter 70, the projection light source 72 and the projection light source adjustment device 74. However, in the present second embodiment, one that can project a dot pattern in which color information is disposed at random (random dot pattern 112) as shown in FIG. 16 is used for the projection pattern filter 70. The electronic flash as the flash emission source, which is a so-called strobe, is used for the projection light source 72 similarly to the illumination light source 60 of the illumination device 14, which can be adjusted to an optional light emission time by the projection light source adjustment device 74. In this way, the light amount of the projection light source 72 is adjusted. In the present embodiment, a parallax is calculated by picking up the image of the object, on which the random dot pattern 112 is projected, by use of the light path dividing device 102, and a distance is calculated by the principle of triangular ranging, thereby making it possible to easily produce the depth image of the object.

In addition, in this embodiment, such a projection device 16 and the illumination device 14 similar to the one in the first embodiment are disposed in the light path dividing device 102, as shown in FIG. 15.

Furthermore, the exposure control device 78 is connected to the photometric device 20, the release button 34, the image pickup aperture adjustment device 38, the image pickup focus adjustment device 40, the image pickup shutter speed adjustment device 42, the sensitivity adjustment device 46, the projection aperture adjustment device 66, the projection focus adjustment device 68, the projection light source adjustment device 74 and the illumination light source adjustment device 62.

Next, an operation of the three-dimensional image pickup apparatus 10 in such a configuration will be described. More specifically, when the photographer presses the release button 34 of the image pickup section 12, the exposure control device 78 reads the luminance information from the photometric device 20. On the basis of this luminance information, the image pickup shutter speed adjustment device 42 is set to a shutter speed at which the object O appears dark without the illumination of the illumination device 14 or the projection of the projection device 16. If the photometric proper ambient light component exposure 80 shown in FIG. 5A is exposure by proper ambient light, exposure after such shutter speed adjustment will be the ambient light component exposure after shutter speed adjustment 82 shown in FIG. 5B. As apparent from FIG. 5A and FIG. 5B, light exposure on the object is insufficient only with the exposure by the ambient light in this operation.

Next, the exposure control device 78 causes the projection device 16 to perform pre-emission, and reads the luminance information at the same time from the photometric device 20. On the bases of this luminance information, an aperture value of the image pickup section 12 is fixed at a value to stop down the aperture as much as possible so that the object O has a correct exposure with the emission amount of the projection light source adjustment device 74. The aperture value is transmitted to the image pickup aperture adjustment device 38. In this way, the ambient light component exposure after aperture/shutter speed adjustment 84 shown in FIG. 5C is accomplished, so that the image pickup with less exposure by the ambient light than the exposure by flash emission can be achieved.

Furthermore, in the projection device 16, the projection light source 72 emits light synchronously with the first image pickup by the image pickup section 12, and illuminates the projection pattern filter 70. An image of the projection pattern filter 70 is formed on the object O via the projection lens 64. At this moment, a stereographic image of the pattern-projected object O as shown in FIG. 17 is formed on the image pickup device 44 through the light path dividing device 102 and the image pickup lens 36, and picked up by the image pickup device 44. This picked-up image data 52 is stored in the image storage device 50 as the stereographic pattern projected image data 104 by the image processing device 48.

Next, the exposure control device 78 sets a proper emission amount of the illumination device 14 in accordance with the luminance information obtained by the pre-emission of the illumination device 14, and indicates the emission amount to the illumination light source adjustment device 62. This enables the image pickup with the proper light amount of the illumination as shown in FIG. 5C.

Here, the illumination device 14 emits light synchronously with the second image pickup by the image pickup section 12, and a stereographic image of the texture-illuminated object O shown in FIG. 18 is picked up. This picked-up image data 52 is stored in the image storage device 50 as the stereographic texture-illuminated image data 106 by the image processing device 48.

To explain the relationship of exposures in greater detail, as shown in FIG. 5A to FIG. 5C, the image pickup shutter speed adjustment device 42 adjusts the shutter speed to a high speed so that the brightness of the object O without using the illumination device 14 or the projection device 16 will be less than the photometric proper ambient light component exposure 80 based on the luminance information from the photometric device 20. In this way, it is possible to obtain the ambient light component exposure after shutter speed adjustment 82 which is darker than when the projection device 16 or the illumination device 14 is used. At this stage, the ambient light component exposure after shutter speed adjustment 82 is less than the flash emission component exposure 86 using the projection device 16 or the illumination device 14.

Next, an image pickup is implemented with the image pickup aperture adjusted by the image pickup aperture adjustment device 38 so that proper brightness is obtained in the illumination of the illumination device 14 and the projection of the projection device 16. In this case, the stereographic pattern projected image data 104 in which the random dot pattern 112 is projected with clear contrast is picked up with the image pickup exposure 88 in which the ambient light component exposure after aperture/shutter speed adjustment 84 and the flash emission component exposure after aperture adjustment 90 are added.

The stereographic pattern projected image data 104 and the stereographic texture-illuminated image data 106 thus obtained are recorded in the removable memory card 54 which is the data transfer device 22, and are handed over as the image data 52 to the three-dimensional reconstruction device 24. Alternatively, they are transmitted by, for example, the data communications device 56 which is the data transfer device 22 so as to be sent as the image data 52 to the three-dimensional reconstruction device 24.

Furthermore, the three-dimensional reconstruction device 24 searches for corresponding points between right and left images by use of the stereographic pattern projected image data 104 to calculate a difference from the corresponding point uniquely decided from the random dot pattern 112 and the texture, that is, a parallax, and calculates a distance by the principle of triangular ranging, thereby producing a depth image of the object O.
This produced depth image is output as the three-dimensional data 32 from the output device 26 together with a texture image obtained from the stereographic texture-illuminated image data 106 corresponding to the depth image.

The above image pickup operation is implemented with each component controlled by the exposure control device 78.

In this way, also in the present second embodiment, a predetermined exposure level is set only with the ambient light, for example, a low exposure level is set by adjusting the shutter speed so that it becomes higher than the shutter speed at which the proper exposure is obtained (underexposure under the ambient light), and then the image pickup aperture is adjusted by the projection to have the proper exposure level, thus performing an image pickup with the projection. This enables the image pickup with less exposure by the ambient light as compared with the projection light amount, so that the image of the pattern can be picked up with good contrast.

Furthermore, the present second embodiment has the following particular effects. If the ambient light component exposure after shutter speed adjustment 82 is achieved, for example, by setting a higher shutter speed than that under the photometric proper ambient light component exposure 80 in accordance with the relationship among the EV (exposure value), the TV (shutter speed) and the AV (FNo.) shown in FIG. 6, the images of the ambient light components are picked up about 5 EV darker. To compensate for this, if the image pickup aperture is adjusted and light emission and projection are performed with the flash emission component exposure after aperture adjustment 90, the random dot pattern 112 with clearer contrast is projected on the object O owing to the texture color and the pattern color of the object O regardless of the color temperature and intensity of the ambient light because the flash emission component exposure after aperture adjustment 90 is sufficiently greater than the ambient light component exposure after aperture/shutter speed adjustment 84. Thus, mismatching in the corresponding point search is reduced and three-dimensional reconstruction can be accomplished also in a region with a monotonous texture color.

In addition, each configuration in this first embodiment can naturally be changed and modified in various manners. For example, the shutter speed is first shifted to the high-speed side before the image pickup aperture is decided in the above description, as shown in FIG. 5A to FIG. 5C and FIG. 6. However, the shutter speed may be shifted to the high-speed side after the image pickup aperture value is stopped down as much as possible to set and adjust to the minimum image pickup aperture on the basis of the emission amount of the projection device 16 based on the adjustment of the projection light source adjustment device 74. In other words, if the aperture of the image pickup section 12 of the moment is the minimum image pickup aperture 96, any point on the aperture selection line with a projection maximum light amount 100 can be selected as the minimum image pickup aperture 96 in a relationship between the image pickup aperture and the projection aperture for adjusting the light amount of flash emission shown in FIG. 9. Here, if the image pickup aperture and the projection aperture have almost equivalent optical conditions, an adjustment may be made so that their aperture values will be equal. Therefore, the minimum image pickup aperture 96 is F4 in FIG. 9. Thus, as shown in FIG. 10, after the minimum image pickup aperture 96 is set and adjusted, the photometric proper ambient light component exposure 80 which is the proper exposure value by the ambient light component of the moment is decided. In this case, the extra light amount 98 is used by the image pickup aperture adjustment device 38 to stop the aperture down as shown in FIG. 11, but the necessary exposure is secured. In addition, the shutter is set to the ambient light component exposure after aperture/shutter speed adjustment 84 by the image pickup shutter speed adjustment device 42 so that the image of the object is darker than the above brightness, and thus the image pickup exposure 88 may be obtained by the projection and illumination. In this case, the projection light source 72 is fully utilized for the object O, thereby making it possible to achieve the projection with a great depth of field (FIG. 12), increase the focus range of the pattern projection and extend a range in which projection is performed with good contrast.

In this way, the image pickup aperture is selected so that the proper exposure can be obtained with the maximum projection emission amount, and then the predetermined exposure level is adjusted to only with the ambient light, for example, the shutter speed is adjusted so that it becomes higher than the shutter speed at which the proper exposure is obtained (underexposure only with the ambient light), and the image pickup is performed with the projection, whereby the image pickup can be performed with less exposure by the ambient light as compared with the projection light amount, in addition to the satisfactory field depth of the image pickup apparatus, and thus the image of the pattern can be picked up with good contrast.

Furthermore, the image pickup is performed in the order of projection and illumination, but may also be performed in the order of illumination and projection. Further, the exposure control device 78 controls each component, but it is needless to mention that the adjustment sections of the image pickup section 12 and the respective devices may be set by a manual operation, in which the same effects can also be obtained. Moreover, the shutter speed in the image pick up with the pattern projection, that is, the second shutter speed is preferably higher than the first shutter speed used for the image pickup without the pattern projection as in the present embodiment. However, if the second shutter speed is equal to or higher than the first shutter speed, a proportion of the exposure by the ambient light does not become larger than that in the image pickup without the pattern projection, and it is thereby possible to obtain the contrast of the image picked up with the pattern projection without unnecessarily deteriorating it. In other words, if the second shutter speed is set to be not slower than the first shutter speed, it is apparent that the image pickup can be achieved with contrast that does not cause troubles to the three-dimensional shape measurement.

Furthermore, a photometric range may be adjusted to any range within a range of the image picked up in a divided manner. In addition, the image pickup apparatus which has the light path dividing device 102 or which is connected to the light path dividing device 102 is used for as a stereographic image pickup apparatus which is the three-dimensional image pickup apparatus 10 in the present embodiment, but a plurality of image pickup sections 12 may be used instead.

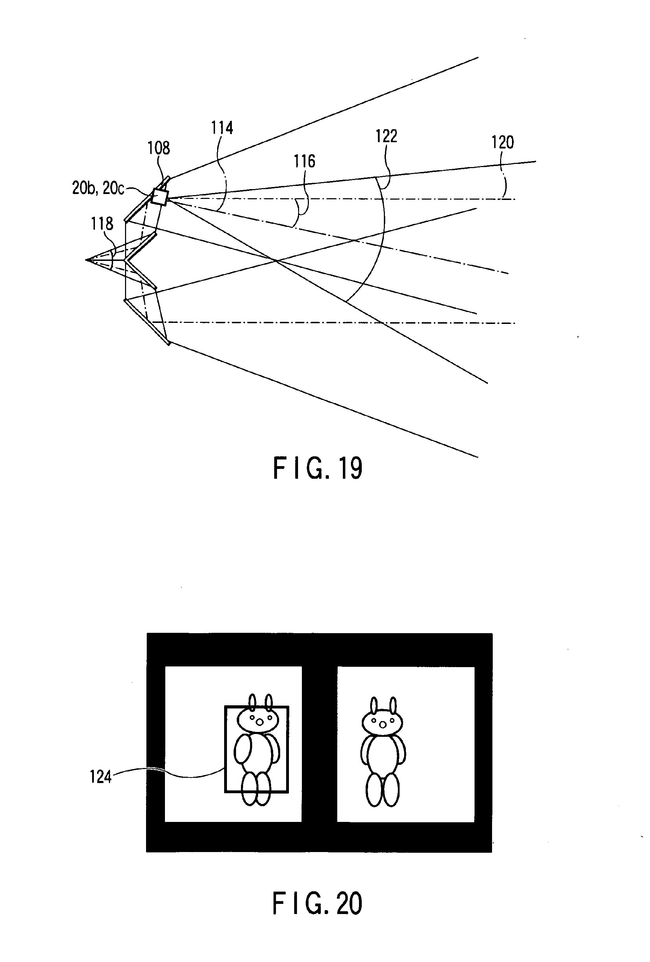

Still further, the aperture and emission amount of the projection device 16 by pre-emission and the emission amount of the illumination device 14 may be decided by use of the emission amount decided from the distance information from the image pickup focus adjustment device 40 of the image pickup section 12 and the emission amounts of the light sources 72 and 60, and the emission amount may be indicated to the projection light source adjustment device 74 and the illumination light source adjustment device 62 by the so-called direct photometry for detection of brightness of an image to be picked up or by the external automatic light control using the external sensor. Here, in the case of the external automatic light control, a second photometric device 20b connected to the projection light source adjustment device 74 and a third photometric device 20c connected to the illumination light source adjustment device 62 are placed in a peripheral part of one of the light receiving mirrors 108 of the light path dividing device 102, as shown in FIG. 19. In this case, these photometric devices 20b and 20c are placed so that their optical axis, that is, a photometric optical axis 114 is directed closer to the other one of the light receiving mirrors 108 at a photometric shift angle 116 within a range of a quarter of an image pickup apparatus field angle 118 from a position where they almost correspond to an optical axis of the light receiving mirror 108, that is, a light receiving optical axis 120. In such a case, the light receiving mirror 108 may be used as a half mirror and provided with the photometric devices 20b and 20c at its back.

Further yet, a photometric field angle 122 of these photometric devices 20b and 20c are set so that it is less than half of the image pickup apparatus field angle 118 as shown in FIG. 19. This makes it possible to conduct photometry in a part 124 in the vicinity of a center of at least one of the images from a plurality of view points of the light path dividing device 102 as shown in FIG. 20, and the light amount of the projection or illumination can be appropriately adjusted by receiving reflected light of the projection or illumination from the object O.

In addition, the present second embodiment may be accomplished, for example, by changing a direct photometric range by the CCD to a range in FIG. 20 in line with light path dividing device 102. In this case, the photometric devices 20b and 20c indicate a local area of the CCD or a portion of picked-up image data.

## Claims

1. An image pickup apparatus (10) capable of performing an image pickup with pattern projection on an object to obtain three-dimensional information on the object, and an image pickup without pattern projection, **characterized by** comprising:
exposure level determination means (78) for determining a predetermined exposure level needed by an image pickup device (44) of the image pickup apparatus; and
shutter speed determination means (78) for determining a first shutter speed to achieve the predetermined exposure level determined by the exposure level determination means in the image pickup without pattern projection, and a second shutter speed not slower than the first shutter speed, and that
the image pickup with pattern projection is conducted by use of the second shutter speed.

2. The apparatus according to claim 1,
**characterized in that** the second shutter speed is a shutter speed faster than the first shutter speed.

3. The apparatus according to claim 1,
**characterized in that**
the image pickup apparatus is a stereographic image pickup apparatus capable of picking up images of the object from a plurality of view points, and
the pattern is a random dot pattern (112).

4. The apparatus according to claim 1,
**characterized in that** the pattern is projected by use of light emitted from a flash emission source (72).

5. The apparatus according to claim 1,
**characterized in that** the shutter speed determination means determines the second shutter speed so as to take a time longer than a time in which the pattern is projected.

6. The apparatus according to claim 1,
**characterized by** further comprising image pickup aperture adjustment means (78) for adjusting an image pickup aperture, and that
the image pickup aperture adjustment means adjusts the image pickup aperture to have the predetermined exposure level at the second shutter speed when the image pickup with pattern projection is conducted.

7. The apparatus according to claim 1,
**characterized in that** the shutter speed determination means determines at least one of the second shutter speed and the image pickup aperture of the image pickup apparatus on the basis of luminance information on the object when the pattern is projected and of the predetermined exposure level.

8. The apparatus according to claim 1,
**characterized in that** the shutter speed determination means determines the first shutter speed on the basis of an image pickup aperture determined in accordance with a desired field depth set by an operator and of the predetermined exposure level.

9. The apparatus according to claim 8,
**characterized in that** the image pickup aperture is an aperture not smaller than an aperture that can achieve the predetermined exposure level in the image pickup with pattern projection on the assumption that the shutter speed of the image pickup apparatus takes the same time as a projection time of the pattern.

10. The apparatus according to claim 1,
**characterized by** further comprising illumination means (14) for illuminating the object during the image pickup, and that
the image pickup apparatus picks up an image of the object illuminated by the illumination means by use of a shutter speed not slower than the second shutter speed.

11. An image pickup apparatus comprising:
image pickup means (12) including an image pickup device (44), for picking up an image of an object;
photometric means (20) for measuring luminance information on the object; and
projection means (16) for projecting a pattern on the object during the image pickup, the image pickup apparatus being capable of performing an image pickup by the image pickup means with pattern projection by the projection means on the object to obtain three-dimensional information on the object, and an image pickup by the image pickup means without pattern projection, **characterized by** further comprising:
exposure level determination means (78) for determining a predetermined exposure level needed by the image pickup device (44); and
shutter speed determination means (78) for determining a first shutter speed to achieve the predetermined exposure level determined by the exposure level determination means in the image pickup without pattern projection, and a second shutter speed not slower than the first shutter speed, on the basis of luminance information on the object measured by the photometric means, and that
the image pickup means conducts the image pickup with pattern projection by the projection means by use of the second shutter speed.

12. A method of an image pickup for an image pickup apparatus capable of performing an image pickup with pattern projection on an object to obtain three-dimensional information on the object, and an image pickup without pattern projection, **characterized by** comprising:
determining a predetermined exposure level;
determining a first shutter speed to achieve the predetermined exposure level in the image pickup without pattern projection, and a second shutter speed not slower than the first shutter speed; and
conducting the image pickup with pattern projection by use of the second shutter speed.

13. A method of controlling an image pickup apparatus capable of performing an image pickup with pattern projection on an object to obtain three-dimensional information on the object, and an image pickup without pattern projection, **characterized by** comprising:
determining a predetermined exposure level; and
determining a first shutter speed to achieve the predetermined exposure level in the image pickup without pattern projection, and a second shutter speed not slower than the first shutter speed, and that
the second shutter speed is used when the image pickup with pattern projection is conducted.
